# EUROPEAN PATENT APPLICATION

(11) **EP 4 810 285 A1**
(43) Date of publication of application: **23.09.2026**
(21) Application number: 26164681.4
(22) Date of filing: 13.03.2026
(51) Int. Cl.: B60J 7/06, B60J 7/10

(54) **LOCKING DEVICE FOR A COVERING TARPAULIN FOR A CARGO BED OF A TRUCK AND COVERING APPARATUS FOR THE CARGO BED OF A TRUCK**

(30) Priority: 18.03.2025 IT 202500005553
(71) Applicant: Cramaro Holding S.p.A., 37044 Cologna Veneta (Verona) (IT)
(72) Inventor: PINELLI, PAOLO, deceased (IT)
(74) Representative: Locatelli, Gian Matteo

(57) **Abstract**

A locking device (1) for a covering tarpaulin for a cargo bed of a truck. The locking device (1) comprises a horizontal arm (2) configured to fix the locking device (1) to an unfolding device (101), preferably a bow unfolding device (101), for a covering tarpaulin (102) for a cargo bed (C) of a truck. Furthermore, the locking device (1) comprises a vertical arm (3) defining an abutment for the covering tarpaulin (102) so as to keep the covering tarpaulin (102) proximal to the cargo bed (C) and prevent a lifting thereof during an unfolded configuration of the covering tarpaulin (102). In particular, the horizontal arm (2) defines a seat (4) adapted to receive the covering tarpaulin (102) at least during an at least partially folded configuration of the covering tarpaulin (102).

## Description

### TECHNICAL FIELD

The present invention relates to a locking device for a covering tarpaulin for a cargo bed of a truck and a covering apparatus for the cargo bed of a truck.

The invention falls in the technical field of covering systems for loading means of transport having a cargo bed within which the load is arranged during handling, for example trucks provided with a tipper semi-trailer.

### PRIOR ART

A tipper semi-trailer is a trailer designed for transporting loose materials, such as sand, gravel, soil, garbage and other goods that can be easily unloaded by tilting the cargo bed. This type of semi-trailer is provided with a cargo bed which acts as a collection compartment for the transported material, a tipping system, usually hydraulic, and a hinged rear hatch in the upper part of the cargo bed, which can rotate to allow the contents to be unloaded.

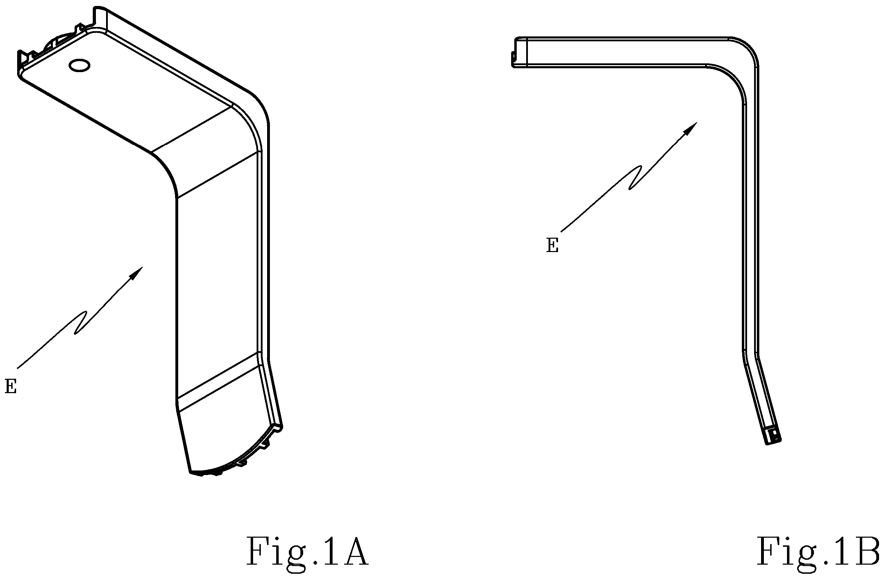

Semi-trailers are also provided with a covering apparatus comprising a tarpaulin and an unfolding device operatively associated with the cargo bed to cover or uncover the collection compartment. The unfolding devices in accordance with the current state of the art comprise a plurality of support bows constrained to the covering tarpaulin and slidably mounted on the cargo bed to automatically move the tarpaulin from a folded configuration to an unfolded configuration. As illustrated in Figures 1A-1B representing the current state of the art, the covering apparatus can further comprise a plurality of locking elements "E" of the tarpaulin having an "L" shape and connected at the ends to the aforementioned bows to lock the edges of the tarpaulin in proximity to the side walls of the cargo bed so as to prevent a lifting thereof during the transport of the load. Disadvantageously, the locking elements constrain the covering tarpaulin, substantially pinching it between their lower surface and the bow, greatly reducing the freedom of movement thereof. In particular, such locking elements generate an impediment to the passage of the covering tarpaulin from the extended configuration to the folded one and are not able to contain the increase in vertical overall volume of the covering tarpaulin due to such passage, causing the occurrence of various kinds of stresses on the tarpaulin that lead to a rapid deterioration of the covering tarpaulin. Operators in the sector are constantly looking for new solutions to increase the durability of the covering apparatuses so as to reduce the need for maintenance interventions.

### OBJECTS OF THE INVENTION

In this context, an object of the present invention is to provide a locking device for a covering tarpaulin for a cargo bed of a truck that is capable of reducing the wear of the covering tarpaulin during the switching of the covering tarpaulin between the folded configuration and the unfolded configuration.

Another object of the present invention is to provide a locking device for a covering tarpaulin for a cargo bed of a truck and a covering apparatus for the cargo bed of a truck having a marked adaptability.

The specified objects are substantially achieved by a locking device for a covering tarpaulin for a cargo bed of a truck and a covering apparatus for the cargo bed of a truck comprising the technical features set forth in the main claim.

The dependent claims correspond to possible advantageous embodiments of the invention.

### BRIEF DESCRIPTION OF THE DRAWINGS

Further features and advantages of the present invention will become more apparent from the following indicative and therefore non-limiting description of a preferred, but not exclusive, embodiment of a locking device for a covering tarpaulin for a cargo bed of a truck and a covering apparatus for the cargo bed of a truck as illustrated in the accompanying drawings, in which:
- Figures 1A-1B illustrate a locking element in accordance with the current state of the art.
- Figures 2A-2B illustrate respective perspective views of a locking device for a covering tarpaulin for a cargo bed of a truck in accordance with a possible embodiment of the present invention;

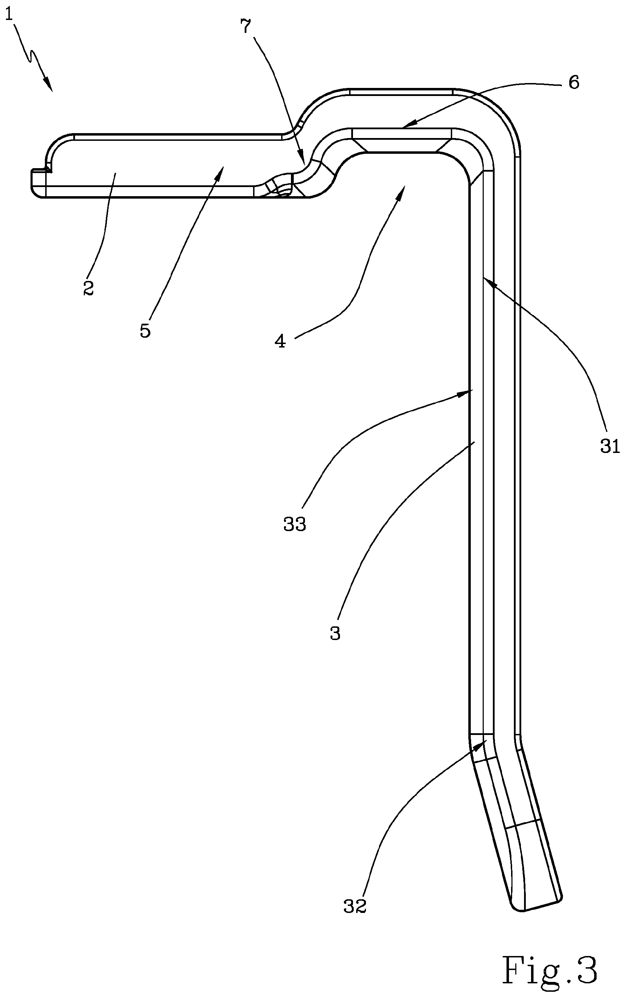

- Figure 3 illustrates a lateral view of the locking device shown in Figure 2A-2B;
- Figure 4 illustrates a lateral view of the locking device shown in Figures 2A-2B in accordance with a possible operating condition;
- Figure 5 illustrates a perspective view of the locking device shown in Figures 2A-2B in accordance with a possible operating condition;
- Figure 6 illustrates a perspective view of a covering apparatus for the cargo bed of a truck in accordance with a possible embodiment of the present invention;
- Figure 7 illustrates an enlarged view of a portion of the covering apparatus for the cargo bed of a truck shown in Figure 4.

### DETAILED DESCRIPTION

The present invention relates to a locking device for a covering tarpaulin for a cargo bed of a truck which will hereinafter be referred to as a locking device 1.

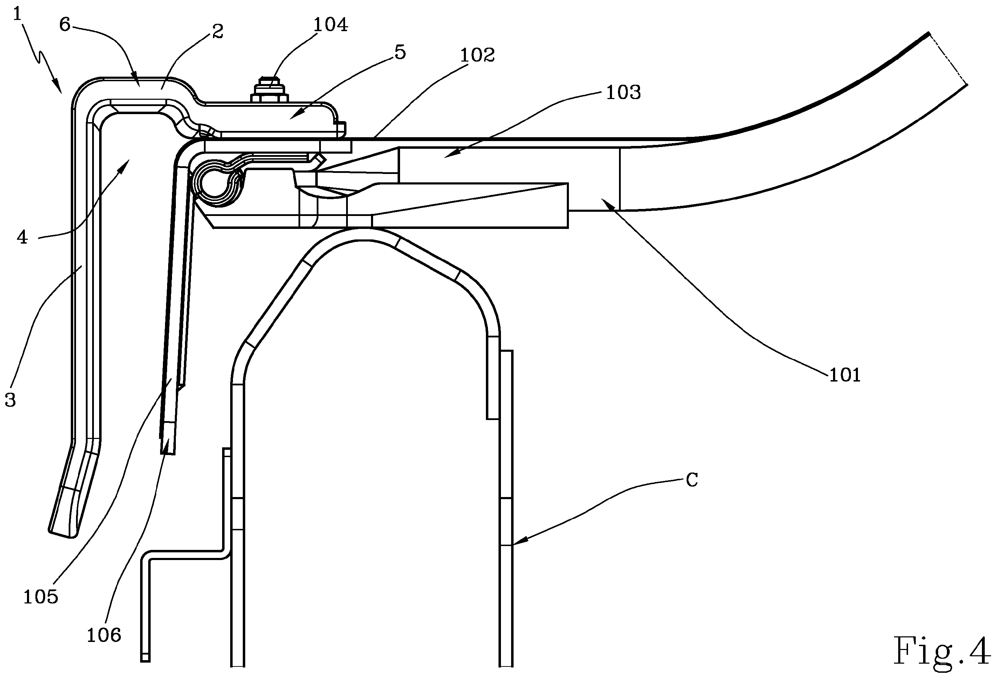

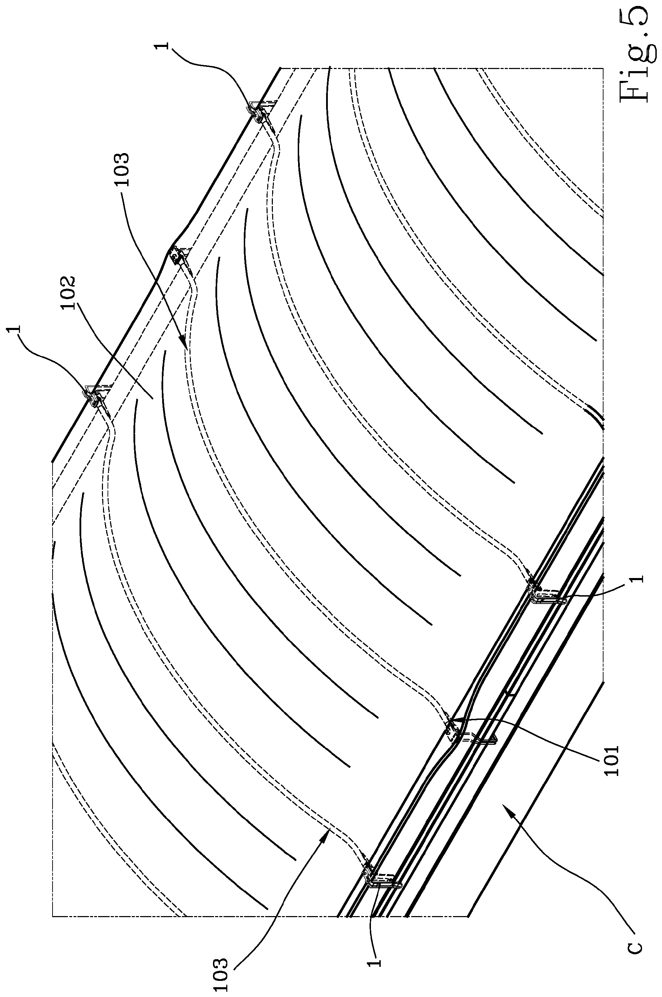

The locking device 1 comprises a horizontal arm 2 configured to fix the locking device 1 to an unfolding device 101, preferably a bow unfolding device, for a covering tarpaulin 102 for a cargo bed "C" of a truck, for example a tipper semi-trailer. With particular reference to Figures 4-5, the locking device 1 is, in use, fixed to a bow 103 of a bow unfolding device 101 and is constrained thereto in the movement along the cargo bed "C" of the truck during the switching of the covering tarpaulin between the folded configuration and the unfolded configuration. Specifically, the horizontal arm 2 is configured to be fixed to the bow 103 such that the covering tarpaulin 102 is, in use, interposed between the locking device 1 and the bow 103. Purely by way of non-limiting example, the horizontal arm 2 extends longitudinally for a length comprised between 75 mm and 95 mm and transversely for a length comprised between 25 mm and 40 mm, preferably 30 mm.

The locking device 1 further comprises a vertical arm 3 defining an abutment for the covering tarpaulin 102 so as to keep the covering tarpaulin 102 proximal to the cargo bed "C" and prevent a lifting thereof during an unfolded configuration of the covering tarpaulin 102. That is, the vertical arm 3 is configured to prevent aerodynamic stresses from causing the lifting of the covering tarpaulin 102 during the transport of the load. Preferably, the horizontal arm 2 and the vertical arm 3 are made in one piece so as to guarantee marked mechanical resistance to the locking device 1.

Advantageously, the horizontal arm 2 and/or the vertical arm 3 can have a rounded section adapted to limit the portion of the locking device 1 in contact with the covering tarpaulin 102 so as to decrease the wear thereof during use.

According to an advantageous aspect, the horizontal arm 2 and/or the vertical arm 3 comprise a plurality of longitudinal and/or transversal ribs 9 adapted to increase the flexural-torsional resistance of the locking device 1.

With particular reference to the attached figures, the vertical arm 3 extends between an upper end 31, constrained to the horizontal arm 2, and a lower end 32. In particular, the vertical arm 3 has a retaining portion 33 facing, in use, the covering tarpaulin 102 to prevent a lifting thereof during an unfolded configuration of the covering tarpaulin 102. Advantageously, the retaining portion 33 can have a section, preferably transverse to the longitudinal extension axis of the vertical arm 3, which is arched so as to limit the wear of the tarpaulin thanks to the absence of sharp edges that rub on the covering tarpaulin 102. Furthermore, such a conformation makes it possible to limit the contact surface between the retaining portion 33 and the covering tarpaulin 102, reducing the wear thereof during use. Advantageously, the horizontal arm 2 defines a seat 4 adapted to receive the covering tarpaulin 102 at least during an at least partially folded configuration of the covering tarpaulin 102. Thereby, the horizontal arm 2 allows the volumetric increase in the covering tarpaulin 102 due to the switching from the unfolded configuration to the folded configuration and reduces the wear on the covering tarpaulin 102 by limiting the contact surface between the covering tarpaulin 102 and the horizontal arm 2. That is, switching from the unfolded configuration to the folded configuration of the covering tarpaulin 102 causes an increase in the vertical overall volume, the seat 4 defines an operating volume that allows such an increase in overall dimensions to be allocated, favouring the folding of the covering tarpaulin 102 and limiting the occurrence of stresses due to the action of the horizontal arm 2 which tend to provoke wear thereof. Preferably, the seat 4 is delimited above by the horizontal arm 2. Furthermore, the seat 4 can be delimited laterally by the vertical arm 3. For example, the seat 4 can be arranged outside the vertical dimensions of the cargo bed "C". That is, the seat 4 can be arranged outside the cargo bed and, preferably, at least partially adjacent to the side walls of the cargo bed "C".

With particular reference to Figure 4, the vertical arm 3 is, in use, facing a vertical portion 105 of a fixing bracket 106 of the unfolding device 101 adapted to fix the covering tarpaulin 102 to the unfolding device 101. In particular, the seat 4 can be delimited laterally by the vertical arm 3 and by the vertical portion 105 of the fixing bracket 106 of the unfolding device 101.

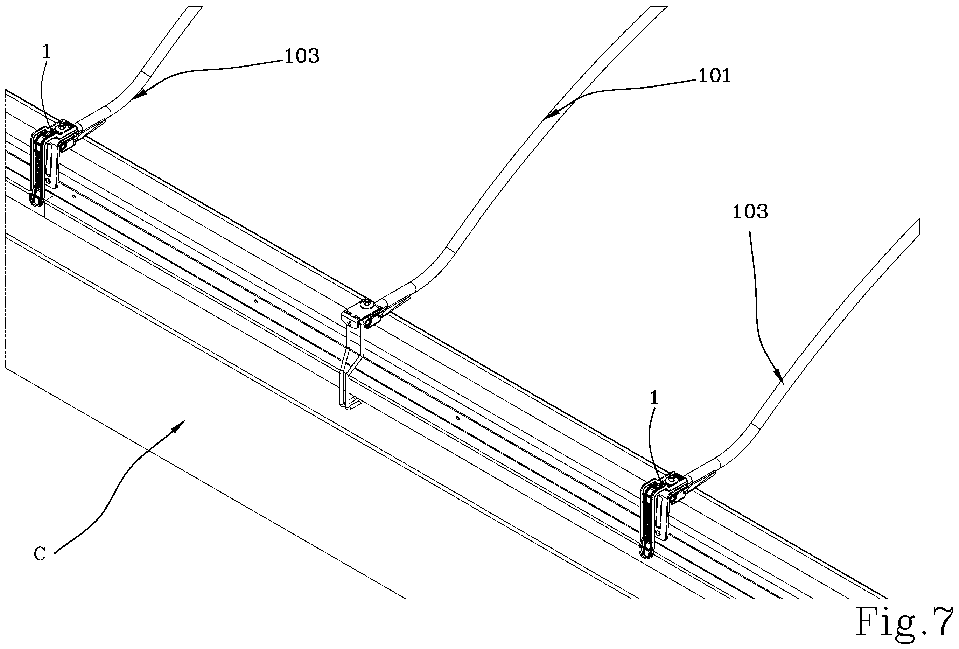

Preferably, in use, the seat 4 extends at least partially above a fixing plane of the horizontal arm 2 to the unfolding device 101 of the covering tarpaulin 102 to limit the increase in the vertical overall volume of the covering tarpaulin 102 due to the passage of the covering tarpaulin from the unfolded configuration (Figures 4-7) to the folded one (not illustrated). For example, the seat 4 can be configured to limit the increase in overall volume of a portion of the covering tarpaulin 102 arranged, in use, in proximity to the side walls of the cargo bed "C".

With particular reference to Figure 4, the horizontal arm 2 has a lowered portion 5, fixable to a respective portion of the unfolding device 101 to connect the locking device 1 to the unfolding device 101 so that the covering tarpaulin is interposed between the lowered portion 5 and the unfolding device, and a raised portion 6, at least partially defining the aforementioned seat 4. That is, the lowered portion 5 is, in use, in abutment on the unfolding device 101 with the interposition of the covering tarpaulin 102.

In the present discussion, the terms "raised" and "lowered" refer to a substantially vertical direction and, preferably, perpendicular to a direction of movement of the truck.

Preferably, the lowered portion 5 and the raised portion 6 have a mainly plate-like extension. In particular, in use, a main lying plane of the raised portion 6 is raised with respect to a main lying plane of the lowered portion 5, helping to maximize the dimensions of the seat 4. For example, the raised portion 6 and the lowered portion 5 have respective main lying planes substantially parallel and mutually spaced by 8 mm along a direction perpendicular thereto.

With particular reference to the attached figures, the raised portion 6 is interposed between the lowered portion 5 and the vertical arm 3 along a main extension direction of the horizontal arm 2. That is, the raised portion 6 has a first end connected to the vertical arm 3 and a second end connected to the lowered portion 5. Preferably, the raised portion 6 has a rounded section that allows to limit the contact surface with the covering tarpaulin 102, reducing the wear thereof during use.

According to a further advantageous aspect, the horizontal arm 2 has a shaped portion 7 adapted to connect the raised portion 6 and the lowered portion 5. In particular, the shaped portion 7 is preferably arched and/or undulated. Thereby, the horizontal arm 2 guarantees to the covering tarpaulin 102 an operating volume free of edges that can cause the wear thereof during the passage from the unfolded configuration to the folded configuration.

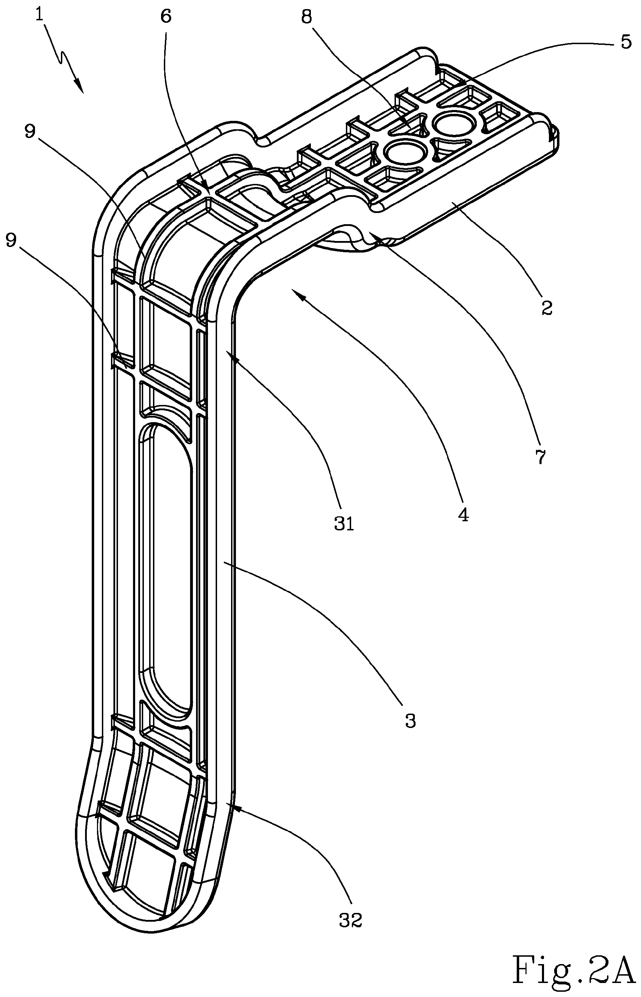

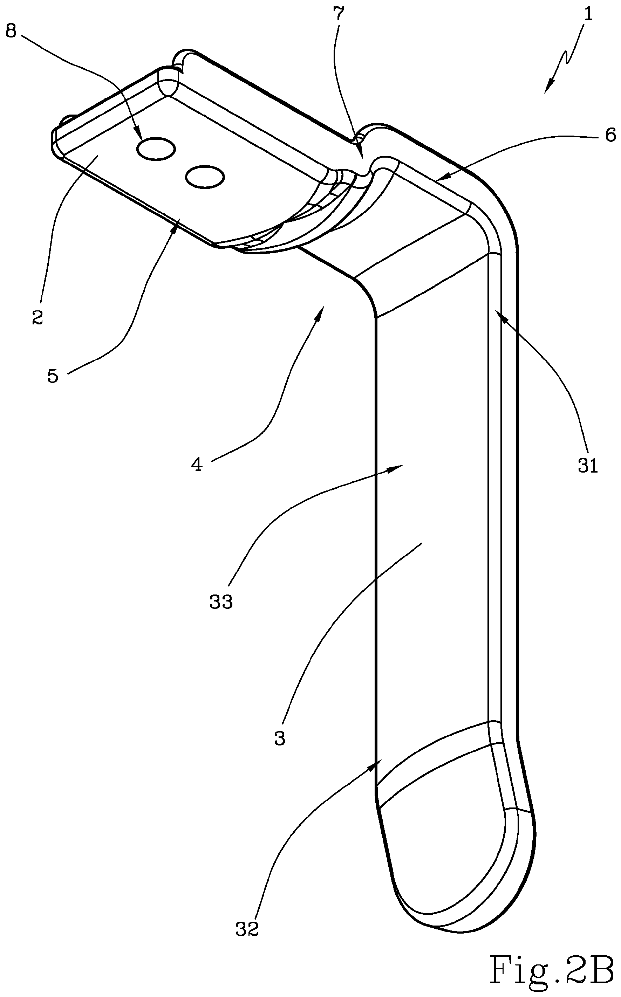

With particular reference to Figures 2A-2B, the lowered portion 5 has a longitudinal succession of fixing openings 8 adapted to selectively receive, by insertion, fixing means 104, preferably threaded fixing means, for fixing the locking device 1 to the unfolding device 101. The fixing openings 8 allow to adjust the fixing of the locking device 1 as a function of the geometric peculiarities of the unfolding device 101 and/or the cargo bed "C", thus conferring marked adaptability to the locking device 1.

In accordance with a further aspect, the present invention relates to a covering apparatus 100 for the cargo bed of a truck.

The covering apparatus 100 comprises a covering tarpaulin 102 (illustrated in Figures 4-5), adapted to cover the containment compartment defined by the cargo bed "C" of a truck, and an unfolding device 101 of the covering tarpaulin 102. In particular, the unfolding device 101 comprises a succession of bows 103 slidably mountable on facing walls of the cargo bed "C" and movable between a front end "A" of the cargo bed and an end-of-travel position, interposed between the front end "A" and a rear end "B" of the cargo bed "C".

Furthermore, the unfolding device 101 can comprise a plurality of fixing brackets 106 each connected to one end of a respective sliding bow 103 and configured to promote a fixing and maintenance of the covering tarpaulin 102 in a position proximal to the unfolding device 101. With particular reference to Figure 4, the fixing bracket 106 has a vertical portion 105 arranged, in use, outside the cargo bed and, preferably, at least partially adjacent to the side wall of the cargo bed "C".

The unfolding device 101 is operatively associated with the covering tarpaulin 102 to move it reversibly between a folded configuration, in which the tarpaulin is arranged substantially folded-up in proximity to the front end "A" of the cargo bed "C", and an unfolded configuration, in which the tarpaulin is substantially unfolded, covering the compartment of the cargo bed "C".

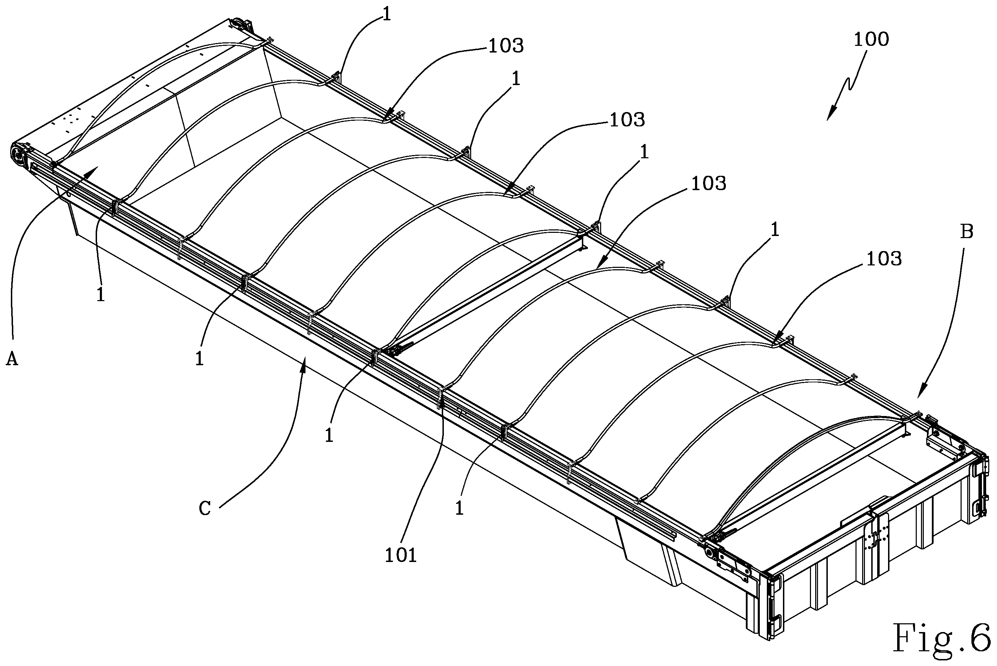

Advantageously, the covering apparatus 100 further comprises at least one locking device 1 in accordance with what has been previously described. With particular reference to Figure 6, the covering apparatus 100 comprises a plurality of locking devices 1 each of which is connected to a respective bow 103 of the unfolding device 101 so as to guarantee an effective retention of the covering tarpaulin 102 during the transport of the load and an increase in the operating life of the tarpaulin thanks to a marked reduction in the wear induced on the covering tarpaulin 102 by the locking devices 1 during the switching between the unfolded configuration and the folded configuration.

## Claims

1. A locking device (1) for a covering tarpaulin for a cargo bed of a truck, said locking device comprising:
- a horizontal arm (2) configured to fix said locking device to an unfolding device (101), preferably a bow unfolding device (101), for a covering tarpaulin (102) for a cargo bed (C) of a truck;
- a vertical arm (3) defining an abutment for the covering tarpaulin (102) so as to keep the covering tarpaulin (102) proximal to the cargo bed (C) and prevent a lifting thereof during an unfolded configuration of the covering tarpaulin (102);
wherein said horizontal arm (2) defines a seat (4) adapted to receive the covering tarpaulin (102) at least during an at least partially folded configuration of the covering tarpaulin (102).

2. The locking device according to claim 1, wherein, in use, said seat (4) extends at least partially above a fixing plane of said horizontal arm (2) to the unfolding device (101) of the covering tarpaulin (102) to limit the increase in the vertical overall volume of the covering tarpaulin (102) due to the passage of the covering tarpaulin (102) from the unfolded configuration to the folded configuration.

3. The locking device according to claim 1 or 2, wherein said horizontal arm (2) has a lowered portion (5), fixable to a respective portion of the unfolding device (101) to connect said locking device to the unfolding device (101) so that the covering tarpaulin (102) is interposed between said lowered portion (5) and the unfolding device (101), and a raised portion (6), at least partially defining said seat (4).

4. The locking device according to claim 3, wherein said lowered portion (5) and said raised portion (6) have a mainly plate-like extension; and wherein, in use, a main lying plane of said raised portion (6) is raised with respect to a main lying plane of said lowered portion (5).

5. The locking device according to claim 3 or 4, wherein said raised portion (6) and said lowered portion (5) have respective main lying planes substantially parallel and mutually spaced by 8 mm along a direction perpendicular thereto.

6. The locking device according to one or more of claims 3-5, wherein said raised portion (6) is interposed between said lowered portion (5) and said vertical arm (3) along a main extension direction of the horizontal arm (2).

7. The locking device according to one or more of claims 3-6, wherein said horizontal arm (2) has a shaped portion (7) adapted to connect said raised portion (6) and said lowered portion (5), said shaped portion (7) preferably being arched and/or undulated.

8. The locking device according to one or more of the claims 3-7, wherein said lowered portion (5) has a longitudinal succession of fixing openings (8) adapted to selectively receive, by insertion, fixing means (104), preferably threaded fixing means (104), for fixing said locking device to the unfolding device (101).

9. The locking device according to one or more of the preceding claims, wherein said seat (4) is delimited above by said horizontal arm (2).

10. The locking device according to one or more of the preceding claims, wherein said seat (4) is delimited laterally by said vertical arm (3).

11. The locking device according to one or more of the preceding claims, wherein said vertical arm (3) is, in use, facing a vertical portion (105) of a fixing bracket (106) of the unfolding device (101) adapted to fix the covering tarpaulin (102) to the unfolding device (101); and wherein said seat (4) is delimited laterally by said vertical arm (3) and by said vertical portion (105) of the fixing bracket (106) of the unfolding device (101).

12. The locking device according to one or more of the preceding claims, wherein said vertical arm (3) has a retaining portion (33) facing, in use, the covering tarpaulin (102) to prevent a lifting thereof during an unfolded configuration of the covering tarpaulin (102), said retaining portion (33) having an arched section.

13. The locking device according to one or more of the preceding claims, wherein said horizontal arm (2) extends longitudinally for a length comprised between 75 mm and 95 mm; and wherein said horizontal arm (2) extends transversely for a length comprised between 25 mm and 40 mm, preferably 30 mm.

14. A covering apparatus for the cargo bed (C) of a truck comprising:
- a covering tarpaulin (102) adapted to cover the containment compartment defined by the cargo bed (C) of a truck;
- an unfolding device (101) for the covering tarpaulin (102) comprising a succession of bows (103) slidably mountable on facing walls of the cargo bed (C) and movable between a front end (A) of the cargo bed (C) and an end-of-travel position, interposed between the front end (A) and a rear end (B) of the cargo bed (C); wherein the unfolding device (101) is operatively associated with the covering tarpaulin (102) to move it reversibly between a folded configuration, in which the covering tarpaulin (102) is arranged substantially folded-up in proximity to the front end (A) of the cargo bed (C), and an unfolded configuration, in which the covering tarpaulin (102) covers the compartment of the cargo bed (C) from the front end (A) substantially up to the end-of-travel position;
- at least one locking device according to one or more of the preceding claims, each locking device being connected to a respective bow (103) of said unfolding device (101).
